# EUROPÄISCHE PATENTANMELDUNG

(11) **EP 2 022 733 A1**
(43) Veröffentlichungstag der Anmeldung: **11.02.2009**
(21) Anmeldenummer: 07009000.6
(22) Anmeldetag: 30.07.2007
(51) Int. Cl.: B65G 1/14

(54) **Stapelsäule**

(71) Anmelder: Laudani, Pietro, 10090 Trana (IT); Laudani, Carmelo, 10090 Trana (IT); Laudani, Silvia, 10090 Trana (IT)
(72) Erfinder: Laudani, Pietro, 10090 Trana (IT); Laudani, Carmelo, 10090 Trana (IT); Laudani, Silvia, 10090 Trana (IT)

(57) **Zusammenfassung**

Stapelsäule mit in verschiedenen oder variablen Positionen artikulierbaren Klinken. Die Unterschiedlichkeit der Oberfläche der Ecken der Stapelsäule bestimmt die Positionen in Arbeitstellung und Ruhestand der Klinken.

## Beschreibung

SCHMETTERLINGSYSTEM IST DIE DEFINITION ETNES RATATIONSSYSTEM. DIESES SYSTEM ERMOËGLICHT DIE ARTIKOLATION. DER KLINKEN MIT VERSCHIEDENEN ODER VARIABLEN POSITIONEN. DESWEITEREN BESTIMMTDIE UNTERSCHIEDLICHKEIT DER OBERFLACHE DER ECKEN DES SCHMETTERLINGE {ALFA}. DIE POSITIONEN IN ARBEITSTEILUNG UND RUHESTAND DER KLINKEN. DURCH DAS POSITIONIEREN SEINER ARTI KOLATIONSACHSE ERMÖGLICHT DIESES SYSTEM ZAHLREICHE ARBEITSPOSITIONEN. DIE EINTUHRUNG VON MEHREREN SCHMETTERLINGSYSTEME ERMÖEGLICHT DIE POSITIONIERUNG AUF UND IN MEHR ETAGEN.

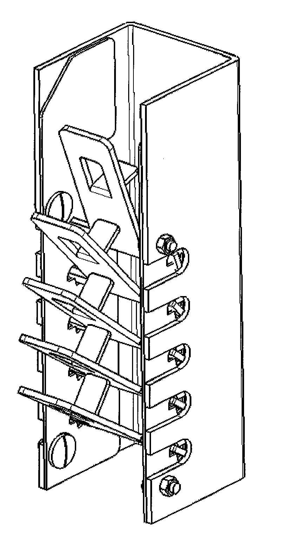

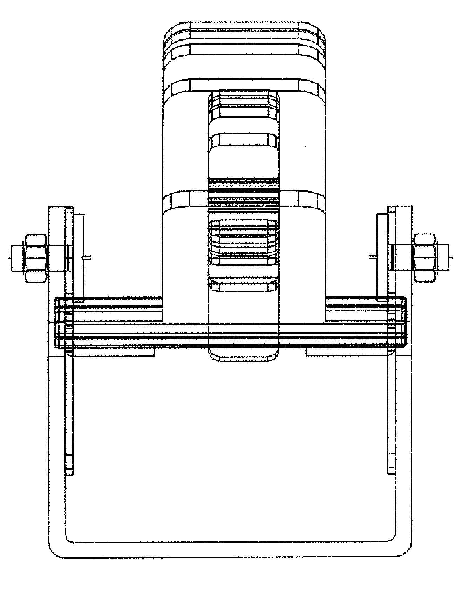

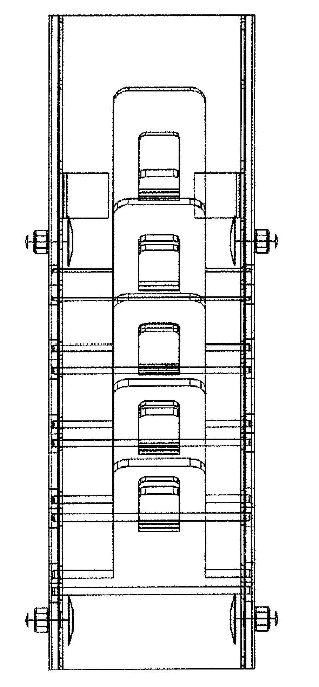

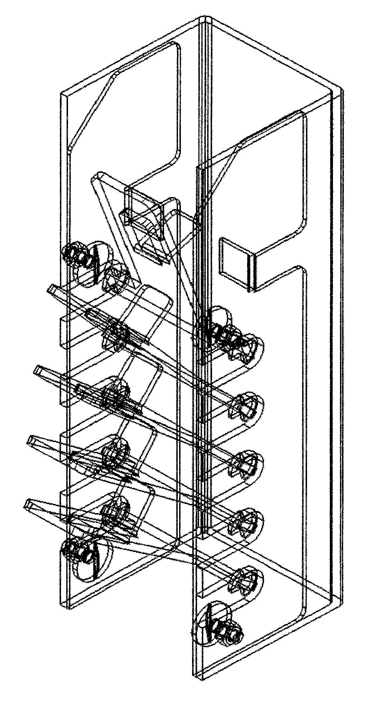

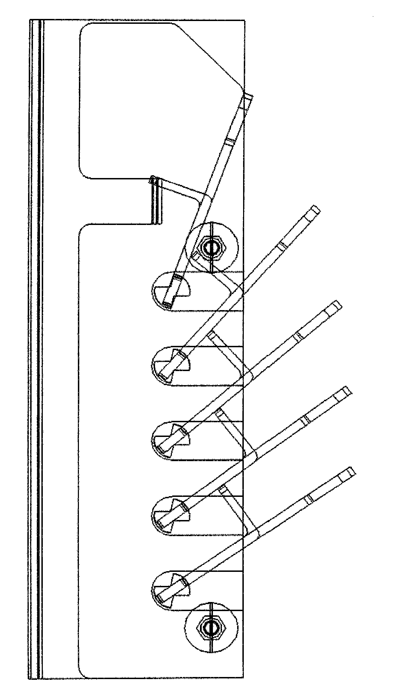

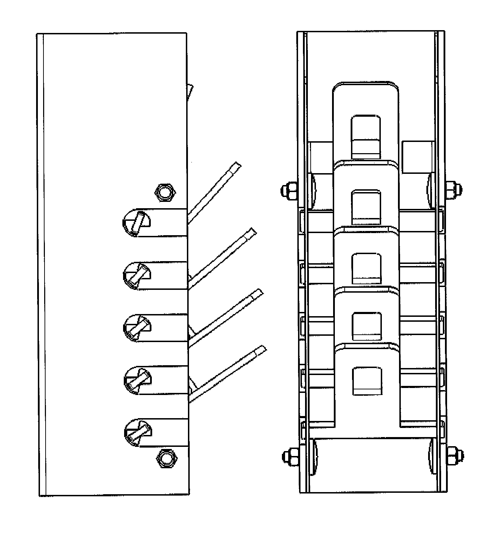

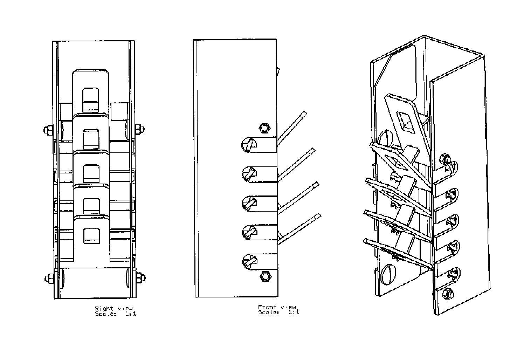

## Patentansprüche

1. die angemeldete Produkte die fuer den Transport und die Lagerung diverser Bauteile dienen sind Erfindung meiner Person und deren im Anmeldeformular erwaehnten Mitarbeiter. Es handelt sich um Klinkentuerme die in diverser Abmessungen hergestellt werden koennen .Deren Funktion ist durch die Gegengewichte gesichert. Eine zusaetzliche Erlaeuterung mit 3D- Zeichnungen wurde bereits am 4.5.2007 in Muenchen inclusiver Anmeldeformular von uns abgegeben.
Der Einsatz dieser Produkte mit diesem " Schmetterlingsystem " ist vielfaeltig.
Da wo die Lagerung und / oder der Transport von Teile dieses System beansprucht, kommt diese in Einsatz.
